# EUROPÄISCHE PATENTSCHRIFT

(11) **EP 0 878 119 B1**
(45) Veröffentlichungstag und Bekanntmachung des Hinweises auf die Patenterteilung: **09.10.2002**
(21) Anmeldenummer: 98114443.9
(22) Anmeldetag: 30.07.1996
(51) Int. Cl.: A01C 15/00, A01M 7/00

(54) **Verfahren zum Steuern und/oder Regeln von landwirtschaftlichen Bearbeitungs- und/oder Verteilmaschinen**
Method for controlling and/or regulating agricultural processing and/or distributing machines
Procédé de commande et de régulation de machines agricoles de travail et/ou de distribution

(30) Priorität: 06.09.1995 DE 19532870; 31.01.1996 DE 19603426
(43) Veröffentlichungstag der Anmeldung: 18.11.1998
(62) Teilanmeldung aus: 96112257.9
(73) Patentinhaber: Amazonen-Werke H. Dreyer GmbH & Co. KG, 49205 Hasbergen (DE)
(72) Erfinder: Scheufler, Bernd, Dr.-Ing., 49205 Hasbergen (DE); Marquering, Johannes, Dipl.-Ing., 49134 Wallenhorst-Rulle (DE); Kemper, Martin, Dipl.-Ing., 49170 Hagen a.T.W. (DE)

(56) Entgegenhaltungen:
- EP-A- 0 181 308
- EP-A- 0 266 527
- EP-A- 0 570 792
- EP-A- 0 578 988
- EP-A- 0 726 024
- EP-A- 0 730 819
- WO-A-95/04450
- DE-A- 4 342 171
- DE-A- 4 423 083
- US-A- 5 220 876

## Beschreibung

Die Erfindung betrifft ein Verfahren gemäß des Oberbegriffes des Patentanspruches 1.

In der Landwirtschaft sind verschiedene Verfahren zum Steuern und/oder Regeln von landwirtschaftlichen Bearbeitungs- und/oder Verteilmaschinen bekannt, die sich zur momentanen Positionsermittlung der Maschine auf dem Feld auf das sogenannte DGPS (Differential Global Position System) stützen. Bei diesem Verfahren sind Rechner vorgesehen, in welchem maschinenspezifische Daten zur Erstellung der Maschine je Standort und Fläche eingespeichert sind.

Die deutsche Offenlegungsschrift 43 42 171 zeigt ein Verfahren gemäß des Oberbegriffes des Patentanspruches 1. Mittels dieses Verfahrens können zur Düngung landwirtschaftlicher Nutzflächen diese abgefahren werden. Da das Fassungsvermögen der Vorratsbehälter von landwirtschaftlichen Verteilfahrzeugen begrenzt ist, müssen die gewährend des Bestreuens von Ackerflächen mehrfach nachgefüllt werden.

Der Erfindung liegt die Aufgabe zugrunde, eine möglichst rationelle Ausbringarbeit zu gewährleisten.

Diese Aufgabe wird in einer Ausführungsform erfindungsgemäß durch die kennzeichnenden Maßnahmen des Anspruches 1 gelöst. Infolge dieser Maßnahmen wird eine Optimierung der Arbeitsweise erreicht.

Desweiteren ist erfindungsgemäß vorgesehen, daß sich das Arbeitsgerät automatisch wieder einschaltet, wenn die Fahrgasse oder die geplante Fahrspur für eine Arbeitsunterbrechung - z.B. zum Nachfüllen des Vorratsbehälters o.ä.-verlassen wird und für die Weiterarbeit wieder angefahren wird. Somit wird also die Arbeit oder das Ausbringen von Material automatisch an der richtigen Stelle, an der die Arbeit unterbrochen worden ist, wieder fortgesetzt, ohne daß Doppel- oder Fehlbearbeitung entsteht.

Weitere Einzelheiten der Erfindung sind den übrigen Unteransprüchen, der Beispielsbeschreibung und den Zeichnungen zu entnehmen. Hierbei zeigen
- Fig.1: den Ausschnitt einer Bodenkarte eines Feldes,
- Fig.2: eine an einen Ackerschlepper angebaute als Schleuderdüngerstreuer ausgebildete Verteilmaschine in der Seitenansicht und in Prinzipdarstellung,
- Fig.3: ein Standortbestimmungssystem in Prinzipdarstellung und
- Fig.4: den Monitor eines Bordcomputers zum Befahren eines Feldes.

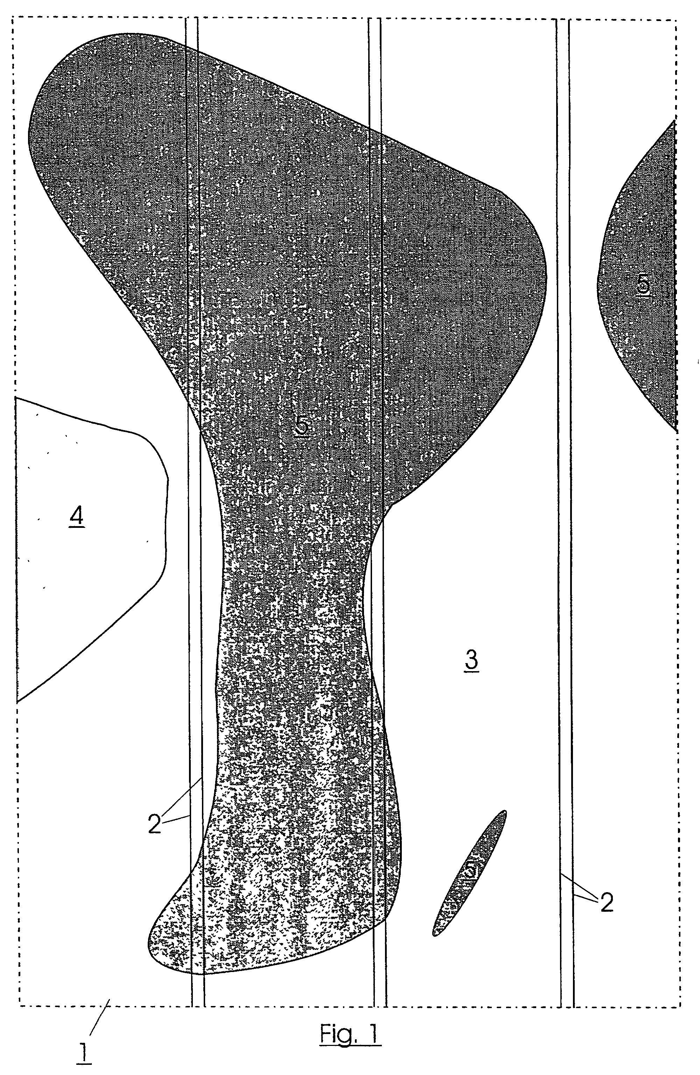

Zur bedarfsgerechten Bewirtschaftung von Flächen werden zunächst in eine Bodenkarte die spezifischen Beschaffenheiten, wie beispielsweise Nährstoffversorgung, Bodenfestigkeit und/oder Bodenart etc. eingetragen. Hierdurch kann sich beispielsweise eine Karte 1 ergeben, wie sie in Fig.1 ausschnittsweise dargestellt ist. Mit den durchzogenen Linien sind die Fahrgassen 2 dargestellt, in welchen Abständen sie angelegt und in welchen Abständen das Feld durchfahren werden soll, um so ein genaues Anschlußfahren zu gewährleisten.

Desweiteren sind verschiedene Teilflächen unterschiedlich schattiert dargestellt. Die weiß unterlegte Fläche 3 stellt die überwiegende Beschaffenheit des Feldes, beispielsweise die Basisbeschaffenheit dieses Feldes dar.

Die hell schattierte Fläche 4 stellt einen Bereich mit einer gegenüber der Basisfläche 3 niedrigeren Nährstoffversorgung dar, während die dunkler schattierten Flächen 5 eine höhere Nährstoffversorgung als die Basisfläche 3 aufweisen. Die in gleicher weise schattierten Flächen weisen also eine ähnliche oder gleiche Nährstoffversorgung auf.

Das gemäß Fig.1 im Teilbereich dargestellte Feld ist in einem Rechner 6 abgespeichert, wobei die Lage der Fahrgassen 2 und die Teilflächen 3, 4, 5 standort- bzw. koordinatenmäßig abgespeichert sind.

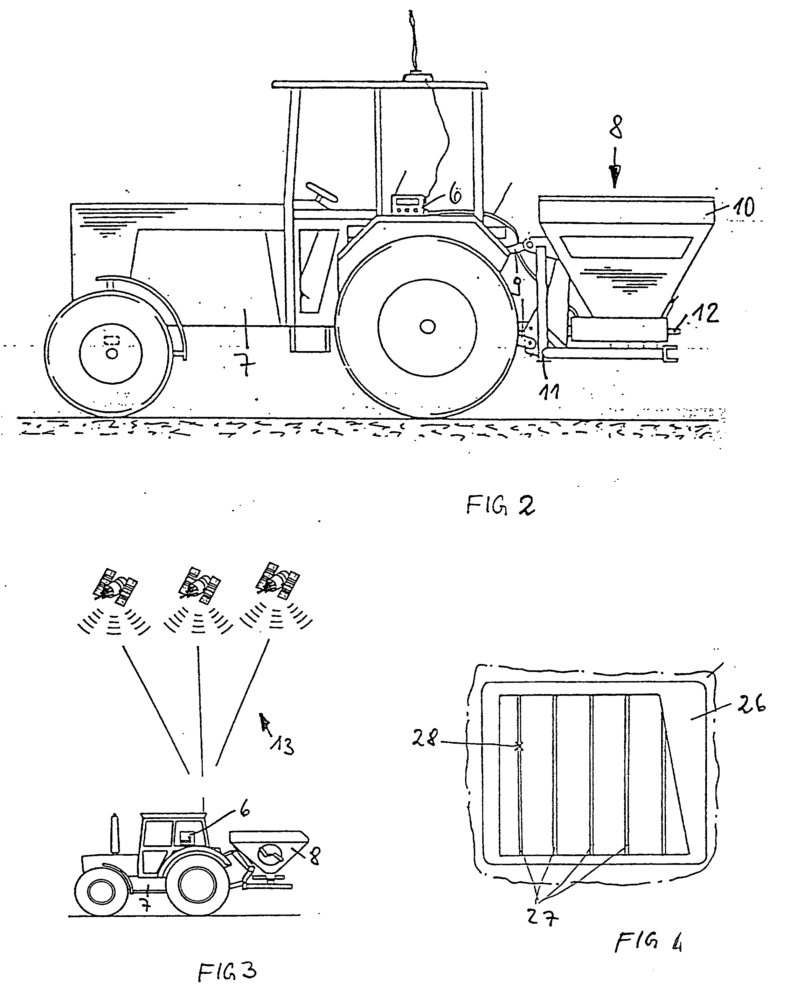

Um auf dem Feld Mineraldünger zu verteilen, ist ein Ackerschlepper 7 mit einem Zentrifugaldüngerstreuer 8 gemäß Fig.2 vorgesehen. An dem Ackerschlepper 7 ist über die Dreipunktkupplung 9 der Zentrifugaldüngerstreuer 8 angebaut. Der Zentrifugaldüngerstreuer 8 weist den Vorratsbehälter 10 und den Rahmen 11 auf. Unterhalb des Vorratsbehälters 10 sind die Schleuderscheiben 12 angeordnet, denen das sich im Vorratsbehälter 10 befindliche Material über eine Dosiereinrichtung zugeführt wird. Die jeder Schleuderscheibe 12 zugeordnete Dosiereinrichtung ist unabhängig von der anderen einstellbar.

Auf dem Ackerschlepper 7 ist der Bordrechner 6 angeordnet. In dieser als Bordrechner 6 ausgebildeten Rechnerstation sind über geeignete Eingabevorrichtungen, wie beispielsweise eine Tastatur, eine Chipkarte, welche über einen auf dem Hof vorhandenen Rechner mit entsprechenden Daten versorgt ist, die Daten über das Feld sowie der Verteilmaschine einzugeben und zu speichern. So sind in dieser Rechnerstation die Bodenkarte, die Verteilung des Materials und die Einstellung des Düngerstreuers eingegeben, wie sie von dem Rechner auf dem Hof entsprechend eines Programmes berechnet worden sind.

Desweiteren ist die Rechnerstation 2 mit einem GPS-System oder einem DGPS-System (Digital Global Position System) 13 ausgestattet. Dieses System 13 arbeitet sattelitengestützt, so daß der aktuelle Standort des Schleppers 7 bzw. der Verteilmaschine 7 auf dem Acker entsprechend genau zu bestimmen ist. Anhand dieser standortermittelten Daten wird die Verteilmaschine 8 entsprechend der in dem Rechner eingegebenen Bodenkarte 1 und Daten gesteuert.

Desweiteren ist in dem Rechner 6 ein Programm abgespeichert, so daß in Abhängigkeit der aktuellen Fahrgeschwindigkeit einer Vorausberechnung durchgeführt wird, zu welchem Zeitpunkt die Verteilmaschine 8 tatsächlich an dem Standort sich befindet bzw. diesen erreicht hat, an dem die jeweils dort festgelegte Menge Material ausgebracht werden soll. Hierdurch wird die sog. Totzeit ausgeschaltet.

Desweiteren ist das in dem Rechner 6 abgespeicherte Programm derart ausgelegt, daß sich das Arbeitsgerät 8 automatisch wieder einschaltet, wenn die Fahrgasse oder die geplante Fahrspur für eine Arbeitsunterbrechung, z.B. Nachfüllen des Vorratsbehälters o.ä., verlassen wird und für die Weiterarbeit wieder angefahren wird. Hierdurch wird automatisch ein nahtloses Verteilen des Düngers erreicht. Um zu verhindern, daß innerhalb einer Arbeitsbahn der Vorratsbehälter 10 nachgefüllt werden muß, ist das Programm in dem Bordcomputer 6 derart ausgelegt, daß der Bordcomputer 6 aufgrund der Planung der Materialverteilung vorausberechnet, an welcher Stelle es sinnvoll ist, den Vorratsbehälter 10 wieder aufzufüllen. Somit werden unnötige Leerfahrten und Doppelfahrten innerhalb des Feldes vermieden.

Um auf Flächen, wie beispielsweise Grünland, auf denen keine Fahrgassen 2 oder andere Orientierungshilfen angelegt sind, ein genaues Anschlußverfahren zu ermöglichen, ist in dem Rechner 6 der vorgegebene Fahrweg eingespeichert, der auf dem Monitor 26 des Rechners 6 entsprechend den Linien 27, die beispielsweise den Fahrgassen 2 entsprechen können, dargestellt wird. Desweiteren wird auf dem Monitor 26 der jeweilige aktuelle Standort des Fahrzeuges 7 auf dem Acker angezeigt. Wenn nun angezeigt wird, wie durch das Kreuz 28 symbollisiert ist, der Schlepper sich in der vorgesehenen Fahrspur 27 befindet, wird der Schlepperfahrer dieser Spur 27 folgen. Falls nun jedoch angezeigt wird, daß der Schlepper 7 sich rechts oder links neben der Fahrgassenspur 27 befindet, so muß der Schlepperfahrer seinen Fahrweg derart korrigieren, daß er sich wieder, wie durch das Kreuz 28 dargestellt ist, in der Spur 27 befindet. Das korrekte Einhalten des Fahrwegs kann beispielsweise mit einem grünen Leuchtpunkt und das Abweichen von dem Fahrweg mit einem roten Leuchtpunkt dargestellt werden.

Das vorbeschriebene Verteilen von Material kann sowohl bei Schleuderdüngerstreuern, Feldspritzen, Sämaschinen etc. angewendet werden.

## Patentansprüche

1. Verfahren zum Steuern und/oder Regeln von landwirtschaftlichen Bearbeitungsund/oder Verteilmaschinen, bei dem in einem Rechner maschinenspezifische Daten zur Einstellung der Maschine je Standort und Fläche eingespeichert sind, wobei anhand der in dem Rechner (6) eingegebenen Daten die Bearbeitungs- und/oder Verteilmaschine gesteuert und/oder geregelt wird, wobei ein Positionsgeber (13) zum Erzeugen von Feldkoordinatensignalen zur Angabe der relativen Position des Fahrzeuges (7,8) auf dem Feld vorgesehen ist, und wobei in Abhängigkeit der aktuellen Position die Steuerung und/oder Regelung erfolgt, **dadurch gekennzeichnet, daß** der Bordcomputer (6) aufgrund der Planung der Fahrspur oder des vorgegebenen Fahrweges vorausberechnet, an welcher Stelle es sinnvoll ist, den Vorratsbehälter wieder aufzufüllen.

2. Verfahren nach Anspruch 1, **dadurch gekennzeichnet, daß** sich das Arbeitsgerät automatisch wieder einschaltet, wenn die Fahrgasse oder die geplante Fahrspur für eine Arbeitsunterbrechung -, z.B. Nachfüllen des Vorratsbehälters o.ä. - verlassen wird und für die Weiterarbeit wieder angefahren wird.

3. Verfahren nach einem oder mehreren der vorstehenden Ansprüche, **dadurch gekennzeichnet, daß** das Dosierorgan am Vorgewende automatisch aufgrund des Positionsgebers zum Erzeugen von Feldkoordinatensignale (GPS) in Verbindung mit den abgespeicherten Felddaten abgeschaltet wird.

4. Verfahren nach einem oder mehreren der vorstehenden Ansprüche, **dadurch gekennzeichnet, daß** an dem Rechner zur Erhöhung der Genauigkeit der GPS-Signale zusätzliche Sensoren, wie Radar, Lenkwinkelgeber oder Radsensoren (Messung der Wegstrecke) vorgesehen sind.

5. Verfahren nach einem oder mehreren der vorstehenden Ansprüche, **dadurch gekennzeichnet, daß** der Öffnungs- und Schließvorgang des Dosierorgans eines Schleuderdüngerstreuers unter Berücksichtigung der Überlappung am Vorgewende mit der Fahrgasse entsprechenden Vorgabe in der Feldkarte durchgeführt wird.

## Claims

1. Method of controlling and/or regulating agricultural cultivating machines and/or distributing machines, wherein data, specific to the machine, is stored in a computer to set the machine according to location and area, wherein the cultivating machine and/or distributing machine are/is controlled and/or regulated with reference to the data input in the computer (6), wherein a position transmitter (13) for generating field co-ordinate signals is provided to give the relative position of the vehicle (7, 8) in the field, and wherein the control and/or regulation are/is effected in dependence on the actual position, **characterised in that** the on-board computer (6) calculates in advance, on the basis of the planning of the track or of the predetermined route, the point at which it is sensible to fill-up the hopper again.

2. Method according to claim 1, **characterised in that** the working implement is actuated again automatically when the tramline or the planned track is departed from for an interruption in the work - e.g. topping-up the hopper or the like - and is started-up again to continue working.

3. Method according to one or more of the preceding claims, **characterised in that**, at the pre-turn area, the metering member is automatically switched-off on the basis of the position transmitter to generate field co-ordinate signals (GPS) in conjunction with the stored field data.

4. Method according to one or more of the preceding claims, **characterised in that** additional sensors, such as radar, steering angle transmitters or wheel sensors (measurement of the distance), are provided for the computer to increase the accuracy of the GPS signals.

5. Method according to one or more of the preceding claims, **characterised in that** the opening and closing operation of the metering member of a centrifugal fertiliser broadcaster is accomplished having regard to the overlapping at the pre-turn area with the start in the map of the field corresponding to the tramline.

## Revendications

1. Procédé de commande et/ou de régulation de machines agricoles de traitement du sol et/ou de distribution, selon lequel on enregistre dans un calculateur, les données spécifiques à la machine pour régler la machine suivant son emplacement et la surface,
et à l'aide des données introduites dans le calculateur (6), on commande et/ou on régule la machine de travail et/ou le distributeur,
un capteur de position (13) étant prévu pour générer des signaux de coordonnées du champ pour indiquer la position relative du véhicule (7, 8) dans le champ et on commande et/ou on assure la régulation en fonction de la position actuelle,
**caractérisé en ce que**
l'ordinateur de bord (6) calcule au préalable la trace et/ou le trajet prédéterminé suivant la planification, pour déterminer l'endroit où il est intéressant de remplir de nouveau le réservoir.

2. Procédé selon la revendication 1,
**caractérisé en ce que**
l'appareil se branche de nouveau automatiquement lorsqu'on arrive dans la voie de passage ou sur la trace prévue par plan, correspondant à l'endroit où le travail a été interrompu (par exemple pour remplir de nouveau le réservoir ou autre), et on reprend le traitement à cet endroit.

3. Procédé selon l'une des revendications précédentes,
**caractérisé en ce que**
l'organe de dosage du dispositif de renvoi est coupé automatiquement par le capteur de position pour générer des signaux de coordonnées de champ (GPS) en liaison avec les données enregistrées du champ.

4. Procédé selon l'une ou plusieurs des revendications précédentes,
**caractérisé en ce que**
pour augmenter la précision des signaux (GPS), le calculateur est relié à des capteurs supplémentaires tels qu'un radar, un capteur d'angle de braquage ou des capteurs de roues (mesure du trajet).

5. Procédé selon l'une ou plusieurs des revendications précédentes,
**caractérisé en ce que**
l'opération d'ouverture et de fermeture de l'organe de dosage d'un épandeur centrifuge d'engrais est effectuée en tenant compte du chevauchement à l'endroit de retournement avec prédétermination des voies de passage dans la carte du champ.
